# EUROPÄISCHE PATENTSCHRIFT

(11) **EP 1 733 632 B1**
(45) Veröffentlichungstag und Bekanntmachung des Hinweises auf die Patenterteilung: **23.07.2008**
(21) Anmeldenummer: 06012227.2
(22) Anmeldetag: 14.06.2006
(51) Int. Cl.: A23L 1/317

(54) **Verfahren zur Herstellung streichfähiger Leberwurst**
Process for producing a spreadable liver sausage
Procédé de préparation de saucisse de foie tartinable

(30) Priorität: 19.06.2005 DE 202005009678 U; 02.09.2005 DE 102005042021
(43) Veröffentlichungstag der Anmeldung: 20.12.2006
(73) Patentinhaber: Denker, Erwin, 82418 Hechendorf bei Murnau (DE)
(72) Erfinder: Denker, Erwin, 82418 Hechendorf bei Murnau (DE)
(74) Vertreter: Behrmann, Niels

(56) Entgegenhaltungen:
- EP-A2- 0 278 427
- CH-A5- 690 413
- DE-A1- 2 364 485
- US-A1- 2005 031 757
- DATABASE FSTA [Online] INTERNATIONAL FOOD INFORMATION SERVICE (IFIS), FRANkFURT-MAIN, DE; 1991, FISCHER A ET AL: "Finely comminuted liver sausage. How the normal commercial emulsifiers work." XP002404669 Database accession no. 91-1-12-s0155

## Beschreibung

Die vorliegende Erfindung betrifft ein Verfahren zur Herstellung streichfähiger Leberwurst nach dem Oberbegriff des Hauptanspruchs. Eine derartige Vorgehensweise, bei welcher Fleisch-Rohstoffe durch Kuttern und Emulgieren in eine homogene Masse verbracht und nachfolgend in einen Darm abgefüllt werden, ist aus dem Stand der Technik allgemein bekannt. Konkret wird dabei, wie beispielsweise in der DE23 64 485 ausführlich beschrieben, Fleisch-Rohmaterial im sogenannten Kochkutter auf mindestens 65°C bis 70°C erhitzt oder in einem Kessel vorgekocht und daraufhin gekuttert, wobei das Kuttern typischerweise unter Zugabe von Salz, Gewürzen und Leber erfolgt und der zum Herstellen einer homogenen Verbindung zwischen dem vorhandenen Wasser und dem Fett notwendige Emulgator im Kutter aktiviert wird, also den rohen Materialien zugegeben und gemeinsam mit diesen im Kutter erhitzt wird.

Die so erzeugte Masse wird dann zur Fertigstellung von Würsten in Därme abgefüllt.

Bereits die DE23 64 485 kritisiert den traditionellen Herstellungsprozess als sehr energieaufwendig und stellt zusätzlich fest, dass durch die erforderliche, vergleichsweise lange Aufbereitungszeit ein Teil des Eiweißes sowie Geschmackstoffe durch Lösung im Brühkessel verloren gehen. Entsprechend wird mit dieser Druckschrift aus dem Stand der Technik ein modifiziertes Verfahren zur Leberwurstherstellung vorgeschlagen, bei welchem die Fleisch-Rohstoffe vorzerkleinert werden und ein Garen unter Vakuum sowie Beaufschlagung mit Sattdampf erfolgt.

Auch dieses konventionelle Verfahren ist jedoch in energetischer Hinsicht nicht optimiert und hat sich, nicht zuletzt aufgrund der verschiedenen komplexen Vor-Verarbeitungsschritte, nicht in der kommerziellen Leberwurstproduktion durchgesetzt. Nach wie vor erfordert zudem dieses bekannte Verfahren die energetisch aufwendige Aktivierung des Emulgators im Kutter durch Erwärmung zusammen mit den Fleisch-Rohstoffen vor dem eigentlichen Kuttern in eine streichfähige Masse.

In der EPO 278 427 A2 wird ein Weg beschrieben, wieenergetisch verbessert -- mit rohem zerkleinertem Fleisch und Fettgewebe streichfähige Leberwürste hergestellt werden können, ohne dass (durch das nachfolgende Erhitzen) es zu unerwünschtem Verklumpen des Fleischeiweißes kommt (aus diesem Grunde wurde nämlich traditionell und bei dem erstgenannten Stand der Technik Fleisch-Rohstoff erwärmt gekuttert): Durch Hinzufügen eines proteolytischen Enzyms in die kalte, unerwärmte Masse wird das Fleischeiweiß so gespalten, dass es bei einem späteren Erwärmen zu keiner Verklumpung kommt und die erzeugte Wurstmasse streichfähig bleibt.

Während, durch das Vermeiden einer Erhitzung der Fleisch-Rohmasse vor dem Kuttern, eine derartige Vorgehensweise energetisch günstiger ist, hat sich in der Praxis die enzymatische Behandlung der Fleisch-Rohmasse als problematisch herausgestellt, denn Endverbraucher (informiert durch pflichtgemäße Deklaration der Inhaltsstoffe) schrecken vor derartigen beigemengten Enzymen zurück.

Aufgabe der vorliegenden Erfindung ist es daher, eine im Hinblick auf den Energieverbrauch und eine kurze Herstellungszeit optimierte Vorgehensweise beim Herstellen von Leberwurst zu schaffen, welche die energetischen Nachteile traditionell vor dem Kuttern erwärmter Rohfleischmasse überwindet, ohne enzymatische Behandlung der Inhaltsstoffe auskommt und in kurzer Herstellungszeit zu einem gut streichfähigen Endprodukt führt.

Die Aufgabe wird durch das Verfahren mit den Merkmalen des Hauptanspruchs gelöst; vorteilhafte Weiterbildungen der Erfindung sind in den Unteransprüchen beschrieben.

In erfindungsgemäß vorteilhafter Weise werden Fleisch-Rohstoffe in frischer, ungebrühter und nicht erhitzter oder erwärmter Form zum Vermischen und Kuttern mit einem Emulgator zusammengebracht, welcher getrennt und separat, d.h. außerhalb des Kutters, und vorab mithilfe heißen Wassers aktiviert wurde. Durch Kuttern wird aus den Fleisch-Rohstoffen, ggf. zusätzlich zugesetzten Gewürzen, zusammen mit dem aktivierten Emulgator eine homogene Masse erzeugt, welche dann -- noch unerhitzt -- in den Darm zum Herstellen einer rohen Leberwurst ein- bzw. abgefüllt wird. Das Mischen und/oder Kuttern erfolgt bevorzugt ohne externe Wärmezuführung, was bedeutet, dass beim Mischen und/oder Kuttern der Bestandteile keine Zuführung von Wärme aus einer Wärmequelle erfolgt, wodurch auf die Verwendung eines Kochkutters verzichtet werden kann. Insbesondere durch Reibung entstehende Prozesswärme beim Mischen und/oder Kuttern kann in Kauf genommen werden. Das Fertigprodukt wird dann durch Erhitzen und Wieder-Abkühlen der rohen Leberwurst erzeugt.

Überraschend und vorteilhaft hat sich bei der Realisierung der Erfindung herausgestellt, dass auf diese Weise ein koagulationsfreies (d.h. nicht zum nachteiligen Verklumpen neigendes), gut streichfähiges Endprodukt entsteht, ohne dass die Fleisch-Rohstoffe vor dem Kuttern wärmebehandelt wurden, und ohne dass eine enzymatische Behandlung, etwa durch proteolytische Enzyme, erforderlich ist.

Durch diese Vorgehensweise lassen sich nicht nur erhebliche Reduzierungen bei der im Prozess einzusetzenden Energie realisieren, auch wird die Herstellungszeit deutlich verkürzt, und durch das Nicht-Vorliegen von Enzymen ist keine verringerte Akzeptanz des Endprodukts auf Seiten der Verbraucher zu erwarten. Von Vorteil ist ferner, dass das erfindungsgemäße Verfahren ohne teilweise als Schlachtabfälle eingestufte Zutaten wie Hirn, Micker, Kalbsgekröse, Pansen und Mägen auskommt.

Besonders vorteilhaft ist es, als Emulgator Mono- und Diglyceride von Speisefettsäuren verestert mit Zitronensäure (E472c), zu verwenden.

Der Emulgator wird weiterbildungsgemäß durch Zugabe von heißem Wasser, idealerweise einer Temperatur >85°C, und im Verhältnis 2,5 bis 3,5 Teile Wasser pro ein Teil Emulgator aktiviert.

Für die gewünschte Streichfähigkeit als günstig hat sich zudem erwiesen, wenn, bezogen auf eine Rohmasse (im wesentlichen bestehend aus Fleisch-Rohstoffen) der Emulgator im Anteil von ca. 1,5 bis 2,5 Gewichtsprozent zugesetzt wird, bevor das -- unerwärmte - Vermischen bzw. Kuttern erfolgt.

In erfindungsgemäß vorteilhafter Weiterbildung der Erfindung hat es sich zudem als günstig herausgestellt, den Leberbestandteil der Fleisch-Rohstoffe (typischerweise Schweineleber) erst zuzugeben und unterzukuttern, sobald das Vermischen und Kuttern zwischen den übrigen Fleisch-Rohstoffen und dem (aktivierten) Emulgator erfolgt ist.

Eine weitere mögliche Verbesserung der Streichfähigkeit lässt sich dadurch erreichen, dass die durch Kuttern erzeugte homogene Masse aus Fleisch-Rohstoffen (eingeschlossen Leber), ggf. Gewürzen und Salz samt Emulgator noch durch eine Mühle weiter behandelt wird.

In der Weiterbildung der Erfindung hat es sich zudem als vorteilhaft erwiesen, die rohe Leberwurst auf eine Kerntemperatur von mindestens 70°C zu erhitzen, wobei dies weiterbildungsgemäß im Kessel oder Kochschrank bei einer Außentemperatur >75°C, idealerweise 78°C bis 80°C, erfolgt, bis die beabsichtigte Kerntemperatur erreicht ist (zu diesem Zeitpunkt erfolgt eine gewisse Koagulation des Fleischeiweißes, erfindungsgemäß bleibt die Masse durch Wirkung des Emulgators gleichwohl streichfähig).

Im Rahmen einer bevorzugten Weiterbildung der Erfindung und zur Erzeugung grober Leberwurstsorten (wobei etwa Grobmaterial in Form von Wammen und Backen vorliegt), wird das derartige grobe Material vom (sonstigen) Fleisch-Rohstoff, der in der oben beschriebenen Weise verarbeitet wird, getrennt behandelt, vorgekocht und, nach dem Kuttern von (übrigen) Fleisch-Rohstoff und Emulgator, unter die resultierende feine Masse gemischt.

Im Ergebnis wird durch die vorliegende Erfindung in überraschend eleganter und energetisch sparsamer Weise eine Leberwurstherstellung ermöglicht, die die Nachteile traditionellen Vorkochens der Fleisch-Rohstoffe überwindet und trotzdem auf eine enzymatische Behandlung der Fleisch-Rohstoffe verzichtet. Das Endprodukt ist gleichwohl eine hochwertige, gut streichfähige Leberwurst, die, neben beachtlicher Energieersparnis, in deutlich reduzierter Fertigungszeit hergestellt werden kann.

Weitere Vorteile, Merkmale und Einzelheiten der Erfindung ergeben sich aus der nachfolgenden Beschreibung eines anhand einer Rezeptur erläuterten Ausführungsbeispiels.

Schweineleber, Kalbfleisch, Rindfleisch, Speck, Backen, Wammen als Fleisch-Rohstoffe werden gekühlt und für eine jeweilige Rezeptur verwogen und im rohen Zustand bereitgestellt.

Die Schweineleber wird im Kutter fein zerkleinert und wieder entnommen.

Kochwurstemulgator E472c wird aktiviert im Verhältnis ein Teil Emulgator : drei Teile Wasser (Wassertemperatur 90°C). Das heiße Wasser und der Emulgator werden, etwa mittels eines Schneebesens, zu einer Paste verrührt, gesondert und außerhalb des Kutters.

Rindfleisch, Schweinefleisch, Wammen und andere Fleisch-Rohstoffe werden in den Kutter gegeben und mit diesem zerkleinert, woraufhin der wie beschrieben aktivierte Emulgator in einem Anteil von ca. 1,8 bis 2,0 Gewichtsprozent (pro Kilogramm Fleisch-Rohmasse) zugegeben und mit der Fleisch-Rohmasse bis zu einer Maximaltemperatur von ca. 28°C cremig gekuttert wird.

Daraufhin wird unter Zugabe von geringen Mengen kalten Wassers eine glatte Emulsion hergestellt, und die zerkleinerte Schweineleber wird untergekuttert.

Nachdem eine homogene Masse entstanden ist, werden in der notwendigen Weise Gewürze und Salz hinzugefügt, und die rohe Masse wird in einen geeigneten Darm (Naturdarm, Kunstdarm, Leinendarm o.ä.) gefüllt.

Es erfolgt ein Erhitzen der so erzeugten rohen Leberwürste, typischerweise in einem Kessel oder Kochschrank, bei ca. 78°C bis 80°C, bis eine Kerntemperatur von mindestens 72°C erreicht ist. Anschließend werden die so erhitzten Leberwürste im kalten Wasserbad oder durch Beduschen abgekühlt.

Gemäß einer Variante des o.a. Herstellungsprozesses und zur weiteren Verbesserung der Streichfähigkeit der homogenen Masse (nach dem Unterkuttern der Leber und dem Hinzufügen der Gewürze) ist es möglich, diese Masse im Anschluss durch eine Mühle zu lassen.

## Patentansprüche

1. Verfahren zur Herstellung streichfähiger Leberwurst, bei welcher Fleisch-Rohstoffe durch Kuttern und Emulgieren in eine homogene Masse verbracht und nachfolgend in einen Darm abgefüllt werden,
**dadurch gekennzeichnet, dass**
die Fleisch-Rohstoffe in einem frischen, ungebrühten und nicht erwärmten Zustand mit einem gesondert durch Zugabe von erwärmtem Wasser aktivierten Emulgator zu der homogenen Masse vermischt und/oder gekuttert werden, insbesondere ohne externe Wärmezuführung,
und eine nach dem Abfüllen der homogenen Masse in den Darm erzeugte rohe Leberwurst so erhitzt wird, dass ein danach wieder abgekühltes Endprodukt streichfähig ist.

2. Verfahren nach Anspruch 1, **dadurch gekennzeichnet, dass** die Fleisch-Rohstoffe Rindfleisch, Schweinefleisch, Wammen, Speck, Backen und/oder Schweineleber aufweisen.

3. Verfahren nach Anspruch 1 oder 2, **dadurch gekennzeichnet, dass** die rohe Leberwurst auf eine Kerntemperatur von mindestens 70°C und/oder auf eine Außentemperatur von mindestens 75°C, bevorzugt mindestens 78°C, erhitzt wird.

4. Verfahren nach einem der Ansprüche 1 bis 3, **dadurch gekennzeichnet, dass** nach dem Erhitzen ein Abkühlen der Leberwurst, insbesondere im Wasserbad, erfolgt.

5. Verfahren nach einem der Ansprüche 1 bis 4, **dadurch gekennzeichnet, dass** der Emulgator Mono- und Diglyceride von Speisefettsäuren aufweist.

6. Verfahren nach Anspruch 5, **dadurch gekennzeichnet, dass** der Emulgator E472c aufweist.

7. Verfahren nach einem der Ansprüche 1 bis 6, **dadurch gekennzeichnet, dass** der Emulgator durch Zugabe von heißem Wasser im Verhältnis 2,5 bis 3,5 Teile Wasser pro ein Teil Emulgator aktiviert wird.

8. Verfahren nach einem der Ansprüche 1 bis 7, **dadurch gekennzeichnet, dass** der aktivierte Emulgator im Verhältnis von 1,5 bis 2,5 Gewichtsprozent, insbesondere 1,8 bis 2,0 Gewichtsprozent, bezogen auf den Fleisch-Rohstoff mit diesem vermischt bzw. gekuttert wird.

9. Verfahren nach einem der Ansprüche 1 bis 8, **dadurch gekennzeichnet, dass** die Fleisch-Rohstoffe beim Vermischen bzw. Kuttern mit dem aktivierten Emulgator keine Leber aufweisen und bevorzugt zerkleinerte Schweineleber nach dem Vermischen bzw. Kuttern zugegeben und untergekuttert wird.

10. Verfahren nach Anspruch 9, **dadurch gekennzeichnet, dass** vor dem Zugeben der Schweineleber und der Zugabe von kaltem Wasser aus dem mit dem aktivierten Emulgator vermischten und gekutterten Fleisch-Rohstoff eine glatte Emulsion erzeugt wird.

## Claims

1. Process for producing spreadable liver sausage, in which raw meat materials are made into a homogeneous composition by cutting and emulsifying and then put into a sausage case, **characterised in that** the raw meat materials are mixed and/or cut in a fresh, non-boiled and non-heated state with an emulsifier activated separately by addition of heated water to form the homogeneous composition, in particular without external heat supply, and a raw liver sausage produced after putting the homogeneous composition into the sausage case is heated so that a subsequently re-cooled end product is spreadable.

2. Process according to claim 1, **characterised in that** the raw meat materials have beef, pork, belly, bacon, back and/or pig's liver.

3. Process according to claim 1 or 2, **characterised in that** the raw liver sausage is heated to a core temperature of at least 70°C and/or to an external temperature of at least 75°C, preferably at least 78°C.

4. Process according to one of claims 1 to 3, **characterised in that** after heating, cooling of the liver sausage takes place, in particular in a water bath.

5. Process according to one of claims 1 to 4, **characterised in that** the emulsifier has monglycerides and diglycerides of edible fatty acids.

6. Process according to claim 5, **characterised in that** the emulsifier has E472c.

7. Process according to one of claims 1 to 6, **characterised in that** the emulsifier is activated by addition of hot water in the ratio 2.5 to 3.5 parts of water per one part of emulsifier.

8. Process according to one of claims 1 to 7, **characterised in that** the activated emulsifier is mixed or cut in the ratio of 1.5 to 2.5 weight per cent, in particular 1.8 to 2.0 weight per cent, relative to the raw meat material, with the latter.

9. Process according to one of claims 1 to 8, **characterised in that** the raw meat materials have no liver during mixing or cutting with the activated emulsifier and preferably comminuted pig's liver is added and undercut after mixing or cutting.

10. Process according to claim 9, **characterised in that** before addition of the pig's liver and the addition of cold water, a smooth emulsion is produced from the raw meat material mixed and cut with the activated emulsifier.

## Revendications

1. Procédé de fabrication de saucisse de foie à tartiner,
dans lequel des matières premières carnées, après avoir été hachées et émulsionnées, sont transformées en une masse homogène et par la suite embossées en boyau,
**caractérisé en ce que**
les matières premières camées, lorsqu'elles sont fraîches, non blanchies et non chaudes, sont mélangées en masse homogène avec un émulsifiant activé séparément par l'ajout d'eau chaude et/ou hachées, en particulier, sans apport externe de chaleur, et une saucisse de foie crue produite après l'embossage en boyau de la masse homogène est chauffée de sorte qu'un produit fini, refroidi de nouveau après cette opération, puisse être tartiné.

2. Procédé selon la revendication 1, **caractérisé en ce que** les matières premières camées contiennent de la viande de boeuf, de la viande de porc, de la hampe, du lard, des joues et/ou du foie de porc.

3. Procédé selon la revendication 1 ou 2, **caractérisé en ce que** la saucisse de foie crue est chauffée à une température à coeur d'au moins 70° C et/ou à une température extérieure d'au moins 75° C, de préférence à 78° C.

4. Procédé selon l'une quelconque des revendications 1 à 3, **caractérisé en ce que**, après le chauffage, un refroidissement de la saucisse de foie a lieu, en particulier, dans un bain d'eau.

5. Procédé selon l'une quelconque des revendications 1 à 4, **caractérisé en ce que** l'émulsifiant présente des monoglycérides et des diglycérides d'acides gras alimentaires.

6. Procédé selon la revendication 5, **caractérisé en ce que** l'émulsifiant présente du E472c.

7. Procédé selon l'une quelconque des revendications 1 à 6, **caractérisé en ce que** l'émulsifiant est activé par l'ajout d'eau chaude, dans une proportion de 2,5 à 3,5 volumes d'eau pour un volume d'émulsifiant.

8. Procédé selon l'une quelconque des revendications 1 à 7, **caractérisé en ce que** l'émulsifiant activé est mélangé avec la matière première carnée ou haché dans une proportion de 1,5 à 2,5 du pourcentage en poids, en particulier, dans une proportion de 1,8 à 2,0 du pourcentage en poids, par rapport à la matière première carnée.

9. Procédé selon l'une quelconque des revendications 1 à 8, **caractérisé en ce que** les matières premières camées ne présentent pas de foie lors du mélange avec l'émulsifiant activé ou du hachage, et de préférence, du foie de porc réduit en morceaux est ajouté après le mélange ou le hachage et rehaché plus finement.

10. Procédé selon la revendication 9, **caractérisé en ce que**, avant l'ajout du foie de porc et l'ajout d'eau froide, une émulsion lisse est produite à partir de la matière première carnée mélangée avec l'émulsifiant activé et hachée.
